# EUROPEAN PATENT APPLICATION

(11) **EP 3 734 900 A1**
(43) Date of publication of application: **04.11.2020**
(21) Application number: 19172299.0
(22) Date of filing: 02.05.2019
(51) Int. Cl.: H04L 9/08, H04L 9/00, H04L 29/06

(54) **USING AND CREATING CERTIFICATES**

(71) Applicant: Fujitsu Finland Oy, 00380 Helsinki (FI)
(72) Inventor: Pekkala, Seppo Tapio, 00380 Helsinki (FI); Näveri, Jari Martti, 00380 Helsinki (FI)
(74) Representative: Kolster Oy Ab

(57) **Abstract**

The invention relates to providing electronic identification and digital certificates in a device. A smart card comprising a digital certificate being linked to a given private and public key pair is accessed (300). Another digital certificate is stored (302) in a memory of the device, the another certificate being linked to the same given private and public key pair as the certificate on the smart card and being usable only when the smart card is accessible to the device.

## Description

### Technical Field

The exemplary and non-limiting embodiments relate to providing electronic identification and digital certificates.

### Background

The development and wide usage of communication systems have introduced the need for providing a possibility to users and organisations to identify themselves in a secure and trustworthy manner as conventional methods of using identifications is not possible in electronic communication. Certificates which are granted by certified authorities or organisations may be used to identify a used which for signing into a secure network or electronic trusted service or sign or encrypt emails and documents.

Public key infrastructure is based on fact that the private part of an asymmetric key pair is stored in the way that only eligible key owner has access to it. Therefore, private key is often stored into the hardware security module in the way that it is impossible to export it in plain-text format, but it is possible to execute cryptographic operations after certain terms of use are met.

With higher security information environments electronic identity of end entities are stored into tamper proof hardware security modules that are easy to carry, but very difficult to use without fulfilling one or more predefined factors, like PIN (Personal Identification Number) or biometric sample. Such hardware security modules are called cryptographic tokens. As an example, a smart card is one form of security token. It contains small computer that can be used to store private key, certificates and other data in the way that private data is protected in the best physical methods as possible, but public data can be read out without limitations. When private key cryptographic operation is required, it is executed inside the token after fulfilling predefined authentication factors.

### Brief description

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to a more detailed description that is presented later.

According to an aspect of the present invention, there is provided methods of claims 1 and 5.

According to an aspect of the present invention, there is provided apparatuses of claims 8 and 12.

According to an aspect of the present invention, there is provided a computer program comprising instructions as claimed in claim 15.

### Brief description of drawings

One or more examples of implementations are set forth in more detail in the accompanying drawings and the description below. Other features will be apparent from the description and drawings, and from the claims.
Figure 1 illustrates an example of a simplified system architecture related to the use of certificates;
Figure 2 illustrates an example of an environment where some embodiments;
Figures 3A and 3B are flowcharts illustrating some embodiments.
Figures 4, 5 and 6 are flowcharts illustrating some embodiments, and
Figure 7 illustrates an example of apparatus according to some embodiments.

### Detailed description of some embodiments

As mentioned authentication of a communicating party in electronic communication is important. An examples an authentication mechanism is certificate-based authentication protocols, which are based on digital certificates that typically include at least a Distinguished Name (DN) and an associated public key. A certificate is typically issued by a Certification Authority (CA). The owner of the certificate further has a private key, which is a pair to the public key, but is kept secret. The CA may verify the identity of the private key owner and create a certificate comprising the public key of the owner and digitally sign it with the private key of the CA. If a party trusts the CA it also may trust that the certificates issued by the CA are valid.

A typical method used in certificates is the use of public/private key pairs. When a public key is included in a certificate, the private key may be used for signing and the public key may be used for verifying the signature. A successful response proves that the signer holds the private key matching the public one in the certificate. Therefore the signer's identity must be the one claimed in the certificate. Since the public/private key pair is unique and the private part is not known to outsiders, outsiders are not able to calculate the correct response.

One way of utilising certificates is to utilise smart cards. A user having a certificate may have a smart card reader in or attached to the computer system used by the user. A smart card may be inserted to the reader be accessible by the computer. The smart card may comprise the private key of the user. The use of the smart card may be protected by a PIN-code (Personal Identification Number) which prevents unauthorised access.

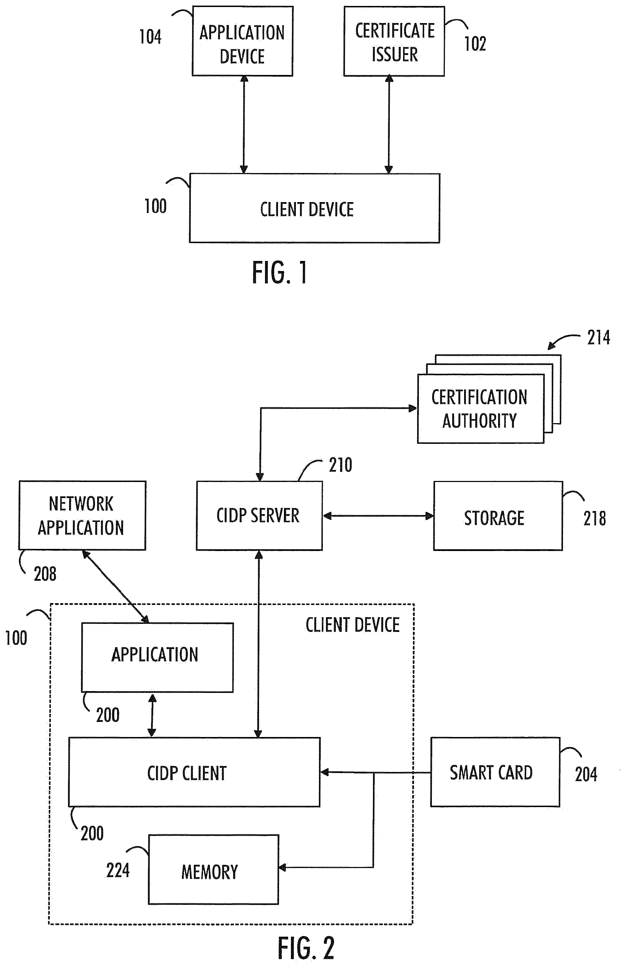

Fig.1 depicts an example of a simplified system architecture related to the use of certificates. The figure showing some elements and functional entities, all being logical units, whose implementation may differ from what is shown. The connections shown in Fig. 1 are logical connections; the actual physical connections may be different. It is apparent to a person skilled in the art that the system typically comprises also other functions and structures than those shown in Fig.1.

The embodiments are not, however, restricted to the system given as an example but a person skilled in the art may apply the solution to other communication systems provided with necessary properties.

Fig.1 shows a client device 100, which is used for actions requiring secure or trusted communications or user authentication. Typically the client device is a personal computer, a laptop or table top computer or other corresponding apparatus. The client device may also be a mobile device such as a tablet or a smart phone (also called UE, user equipment, user terminal, terminal device, etc.). The client device is capable of communicating with remote servers or computers located in various networks via Internet, for example. The client device 100 may be in connection with a remote server 102 which controls the use of certificates. The server 102 may be running a Certification Authority (CA) application, which is responsible for granting or issuing certificates. The CA may issue a certificate for the user of the client device or the user of the client device. The CA may comprise a database (not shown) storing data related to certificates. The client server may be in connection with the CA server 102 via another server acting as a registration authority (RA), not shown in this simplified example.

The client device may also be in connection with an application running in a remote computer apparatus 104. The application may require authentication or other use of a certificate.

Fig.2 illustrates an example of an environment where some embodiments of the invention may be applied. The simplified system architecture only showing some elements and functional entities, all being logical units, whose implementation may differ from what is shown.

Fig.2 shows the client device 100. The client device comprises a Certificate Identity Provider, CIDP, client 200, which in an embodiment may be an application running in the client device. The CIDP client 200 may be configured to communicate utilising industry standard cryptographic Application Program Interface, API, which is commonly used by cryptographic applications. The client device further comprises a memory 202. The client device further is connected to a smart card 204 which may be installed on a smart card reader located in the client device or connected to the client device. The client device may comprise an application 206 using the smart card.

Fig.2 further shows a network application 208, which may request smart card credentials or certificate from the application 206 or the client device 100. The network application may run in a server in the Internet, for example.

Fig.2 further shows a Certificate Identity Provider, CIDP, server 210, which may be configured to validate CIDP client identity and operate when certificates are needed. The CIDP server 210 may communicate with the CIDP client 200 in the client device 100. The CIDP server 210 may be connected to a storage or memory 216 which is configured to store certificates. The memory may also be a part of the CIDP server.

Fig.2 further shows one a Certificate Authority, CA, 214, which issues certificates based on requests from the CIDP server 210. There may be more than one Certificate Authorities 214 connected to the CIDP server 210.

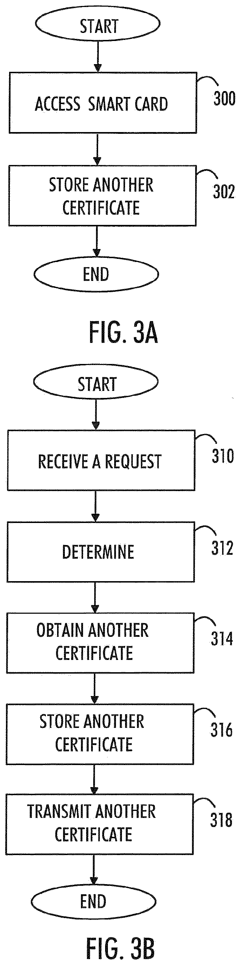

Figures 3A and 3B are flowcharts illustrating some embodiments.

Fig.3A illustrates an example of the operation of the client device 100.

In step 300, the client device is configured to access a smart card comprising a digital certificate being linked to a given private and public key pair.

In step 302, the client device is configured to store another digital certificate in a memory of the device, the another certificate being linked to the same given private and public key pair as the certificate on the smart card and being usable only when the smart card is accessible to the device.

Thus, the use of the another certificate is dependent on whether the smart card comprising the certificate with the same key pair is available to the client device. It may be noted that there may be more than one digital certificate stored in the memory of the device.

Fig.3B illustrates an example of the operation of the CIDP server 210.

In step 310, the CIDP server 210 receives a certificate request from a client device 100, the request comprising information on the certificate stored on a smart card 204 connected to the client device, the digital certificate being linked to a given private and public key pair.

In step 312, the CIDP server 210 determines that a digital certificate on the smart card is valid.

In step 314, the CIDP server 210 obtains another certificate from a certificate authority 214, the another certificate being linked to the same given private and public key pair as the certificate on the smart card.

In step 316, the CIDP server 210 stores the another certificate; and

In step 318, the CIDP server 210 transmits the another certificate to the client device.

Thus, in an embodiment one or more certificates may be issued based on an existing trusted certificate on a smart card. The issued one or more certificates are not stored on the smart card but on a memory in the client device and in the memory storage of CIDP server. Thus, they may be denoted as additional or virtual certificates associated with a trusted certificate on a smart card. When the additional or virtual certificates are used, the application or server requesting them is unaware that they are not stored on a smart card but in the memory.

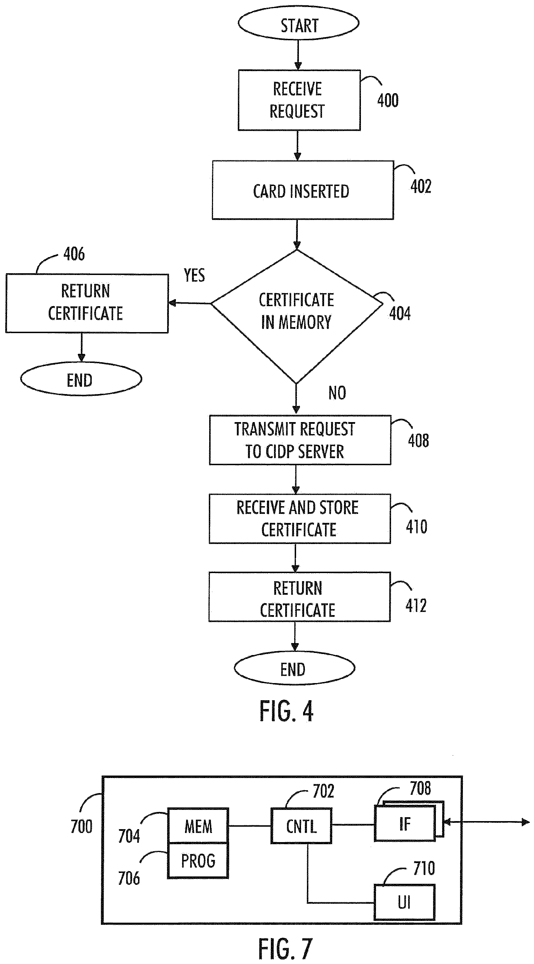

Fig.4 is a flowchart illustrating an embodiment. Fig.4 illustrates an example of the operation of the client device 100.

In step 400, the CIDP client receives a request of a certificate. The request may come from network application 208 or application 200 running in the client device, for example.

In step 402, the CIDP client determines that a smart card linked to a given private and public key pair is accessible to the CIDP client.

In step 404, the CIDP client checks whether the requested certificate is stored in a memory 224 of the device or on the smart card.

If so, the requested certificate is transmitted as a response to the request in step 406.

If not, it is determined that such a certificate is not found in the device or on the smart card.

In step 408, the CIDP client transmits a request to the CIDP server 210, the request comprising information on the certificate stored on the smart card. In an embodiment, the request may comprise additional credentials, such as credentials used to login to the client device running CIDP client.

In step 410, the CIDP client receives another certificate from the CIDP server 210, the another certificate being linked to the same given private and public key pair as the certificate on the smart card.

In step 412, the requested certificate is transmitted as a response to the request.

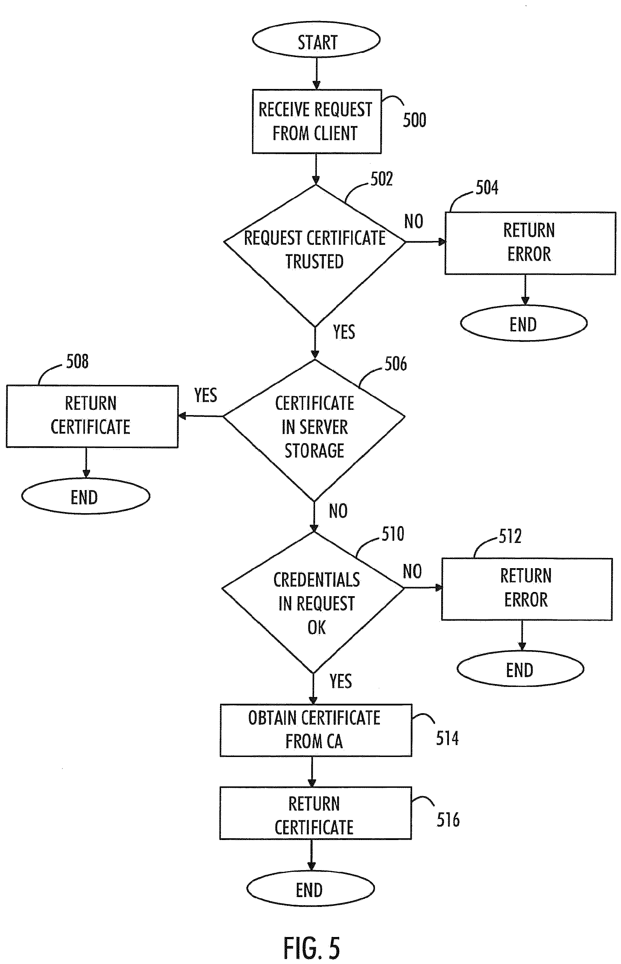

Fig.5 is a flowchart illustrating an embodiment. Fig.5 illustrates an example of the operation of the CIDP server 210.

In step 500, the CIDP server 210 receives a certificate request from CIDP client 200 in a client device 100, the request comprising information on the certificate stored on a smart card connected to the client device, the digital certificate being linked to a given private and public key pair. In an embodiment, the certificate request comprising additional credentials, such as credentials used to login to the client device.

In step 502, the CIDP server 210 checks whether the received digital certificate is trusted or valid.

If not, the CIDP server 210 returns an error in step 504.

If yes, the CIDP server 210 checks in step 506 whether the requested certificate is stored in a memory 216 connected to the CIDP server.

If so, the requested certificate is transmitted as a response to the request in step 508.

If not, the CIDP server 210 checks in step 510 whether the received additional credentials trusted or valid, if they were included in the request.

If they are not valid the CIDP server 210 returns an error in step 512.

In step 514, the CIDP server 210 obtains another certificate from a certificate authority 214, the another certificate being linked to the same given private and public key pair as the certificate on the smart card.

In step 516, the CIDP server 210 stores the another certificate in memory or storage 216.

In step 518, the CIDP server 210 transmits the another certificate to the client device.

Again it may be noted that there may be more than one digital certificate processed.

The above examples illustrate a case, for example, where a user has a smart card comprising a certificate confirming the identity of the carrier of the card. The smart card may be issued by an authority such as government, for example. Another organisation, such as an employer, may grant the user a certificate to access a work domain based on the trusted certificate on the smart card. Thus issuing another smart card for the domain certificate may be avoided. From the domain point of view, the server controlling access to the domain sees the certificate as a trusted certificate regardless that it is not on a smart card. The server is unaware that the certificate is not stored on a smart card but in the memory.

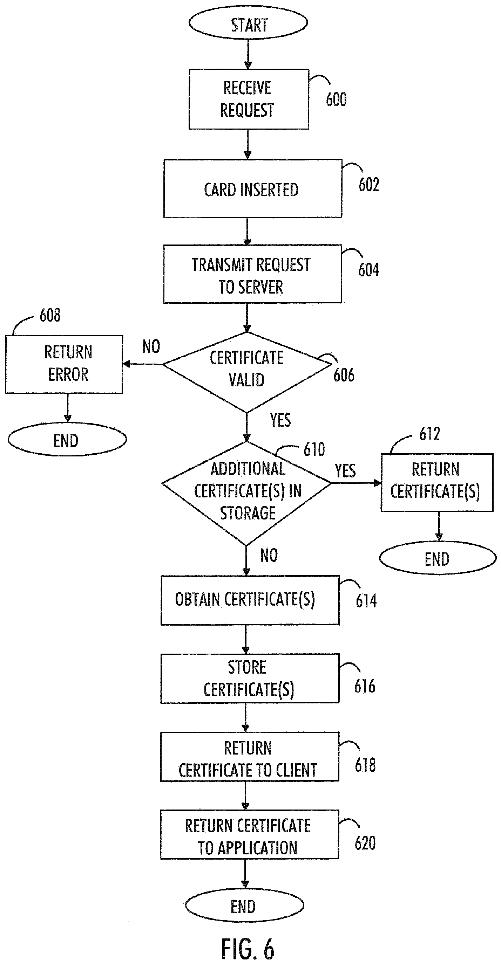

Fig. 6 is another flowchart illustrating an embodiment. Fig.6 illustrates an example of the operation of the client device 100 and the CIDP server 210

In step 600, the CIDP client receives a request of a certificate or certificates. The request may come from network application 208 or application 200 running in the client device, for example.

In step 602, the CIDP client determines that a smart card linked to a given private and public key pair is accessible to the CIDP client.

In step 604, the CIDP client transmits a certificate request to the CIDP server 210. The request comprises the certificate stored on the smart card.

In step 606, the CIDP server checks whether the smart card certificate is trusted. If not, an error is returned in step 608.

Otherwise, in step 610, the CIDP server checks whether the requested certificate or certificates are stored in storage or memory 218. If so, they are returned to the CIDP client in step 612.

Otherwise, in step 614, the CIDP server obtains requested certificate or certificates from a suitable Certificate Authority CA 215. The certificate or certificates will utilise the same private and public key as the trusted certificate on the smart card.

In step 616, the CIDP server stores the certificate or certificates to storage or memory 218.

In step 618, the CIDP server returns the certificate or certificates to the CIDP client.

In step 620, the CIDP client returns the certificate or certificates to the requesting application or server like they were read from the inserted smart card.

As an example, consider a case, where a secretary has been granted access to read emails of another user B. When a given secretary A is on vacation, another secretary C must be able to read the email for the duration of the vacation. In an embodiment, the secretary C is given certificate or certificates using which the secretary can access the emails of the user during secretary A's vacation. The organisation database may store data of access rights of users. The database may store data indicating that secretary C may read the emails of user B during given time.

When the secretary C first time logs on his/her computer using a smart card and tries to access user B's email, the system recognises that a certificate is needed to access the email. Such certificate is not found on the smart card or in the memory of the computer. The system requests certificate from the CIDP server. The CIDP server checks that the certificate on smart card on trusted and that the secretary C has a right to access user B's email (as indicated in the organisation database). Required certificate is not found, as this is the first time secretary C is about to read the emails. A required certificate is obtained from CA, stored by the CIDP and transmitted to the CIDP client at the secretary C's computer. Now the secretary C may access the email. When the secretary C accesses the email at a later time instant, CIDP client retrieves the certificate from the local memory and allows access.

Thus the proposed solution enables a flexible and at the same time a secure way of processing certificates. As the created additional or virtual certificates are based on a trusted certificate on a smart card the security is guaranteed. Certificates may be created 'on the fly' as long as smart card with a trusted certificate is accessible (and the organisation databases up-to-date). The use of the created additional or virtual certificates is possible only when the smart card is accessible to the CIDP client.

Fig. 7 illustrates a simplified example of an apparatus 700 which may be a client device and CIDP server in which embodiments of the invention may be applied. It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities. For example, the apparatus may be realized using cloud computing or distributed computing with several physical entities located in different places but connected with each other

The apparatus of the example includes a control circuitry 702 configured to control at least part of the operation of the apparatus.

The apparatus may comprise a memory 704 for storing data. Furthermore the memory may store software or applications 706 executable by the control circuitry 702. The memory may be integrated in the control circuitry.

The control circuitry 702 is configured to execute one or more applications. The applications may be stored in the memory 704.

The apparatus may further comprise user interface 710 operationally connected to the control circuitry 702.

The apparatus may further comprise one or more interfaces 708 operationally connected to the control circuitry 702. The interfaces may be connected to an antenna or a set of antenna elements (not shown). The interfaces may provide the apparatus a connection to other apparatuses. The interfaces may be various wired or wireless or radio interfaces providing the apparatus a connection to a radio access system via which other apparatuses may be reached. For example, if the apparatus is the client device 100, the apparatus may communicate with network servers and applications 208, 210, for example. If the apparatus is the client device 100, an interface 708 may be a smart card reader, enabling the apparatus to access a smart card inserted into the reader. The smart card may require inputting a PIN code using the user interface 710 prior the smart card can be accessed. If the apparatus is the CIDP server 210, the apparatus may communicate with client device 100 and one or more CA's 214, for example.

The steps and related functions described in the above and attached figures are in no absolute chronological order, and some of the steps may be performed simultaneously or in an order differing from the given one. Other functions can also be executed between the steps or within the steps. Some of the steps can also be left out or replaced with a corresponding step.

The apparatuses or controllers able to perform the above-described steps may be implemented as an electronic digital computer, or a circuitry which may comprise a working memory (RAM), a central processing unit (CPU), and a system clock. The CPU may comprise a set of registers, an arithmetic logic unit, and a controller. The controller or the circuitry is controlled by a sequence of program instructions transferred to the CPU from the RAM. The controller may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

An embodiment provides a computer program embodied on a distribution medium, comprising program instructions which, when loaded into an electronic apparatus, are configured to control the apparatus to execute the embodiments described above.

The computer program may be in source code form, object code form, or in some intermediate form, and it may be stored in some sort of carrier, which may be any entity or device capable of carrying the program. Such carriers include a non-transitory computer readable medium, record medium, computer memory, read-only memory, and a software distribution package, for example. Depending on the processing power needed, the computer program may be executed in a single electronic digital computer or it may be distributed amongst a number of computers.

The apparatus or parts of the apparatus may also be implemented as one or more integrated circuits, such as application-specific integrated circuits ASIC, field-programmable gate array FPGA, electronically erasable programmable read-only memory EEPROM. Other hardware embodiments are also feasible, such as a circuit built of separate logic components. A hybrid of these different implementations is also feasible. When selecting the method of implementation, a person skilled in the art will consider the requirements set for the size and power consumption of the apparatus, the necessary processing capacity, production costs, and production volumes, for example.

It will be obvious to a person skilled in the art that, as the technology advances, the inventive concept can be implemented in various ways. The invention and its embodiments are not limited to the examples described above but may vary within the scope of the claims.

## Claims

1. A method in a device, comprising:
accessing a smart card comprising a digital certificate being linked to a given private and public key pair;
storing another digital certificate in a memory of the device, the another certificate being linked to the same given private and public key pair as the certificate on the smart card and being usable only when the smart card is accessible to the device.

2. The method of claim 1, further comprising:
receiving a request of a certificate,
determine that the certificate is stored in a memory of the device;
determine that the smart card being linked to the same given private and public key pair as the requested certificate is accessible to the device;
utilise the requested certificate.

3. The method of claim 1 or 2, further comprising:
receiving a request of a certificate;
determining that such a certificate is not found in the device or on the smart card;
transmitting a request to a server, the request comprising information on the certificate stored on the smart card;
receiving another certificate from the server, the another certificate being linked to the same given private and public key pair as the certificate on the smart card;
responding to the request.

4. The method of claim 3, further comprising:
the request to the server further comprising credentials used to login to the device.

5. A method in a server apparatus, comprising:
receiving a certificate request from a client device, the request comprising information on the certificate stored on a smart card connected to the client device, the digital certificate being linked to a given private and public key pair;
determining that a digital certificate on the smart card is valid;
requesting another certificate from a certificate authority, the another certificate being linked to the same given private and public key pair as the certificate on the smart card;
storing the another certificate; and
transmitting the another certificate to the client device.

6. The method of claim 5, further comprising:
the certificate request comprising credentials used to login to the device client.

7. The method of claim 6, further comprising:
determining that the credentials used to login to the device client are valid prior requesting another certificate from a certificate authority.

8. A client device comprising:
means for accessing a smart card placed in a smart card reader;
means for reading from the smart card a digital certificate being linked to a given private and public key pair;
means for storing another digital certificate in a memory of the device, the another certificate being linked to the same given private and public key pair as the certificate on the smart card;
means for enabling the use of the another certificate only when the smart card is accessible to the device.

9. The client device of claim 8, further comprising:
means for receiving a request of a certificate,
means for determining that the certificate is stored in a memory of the device;
means for determining that the smart card being linked to the same given private and public key pair as the requested certificate is accessible to the device;
means for utilising the requested certificate.

10. The client device of claim 8 or 9, further comprising:
means for receiving a request of a certificate,
means for determining that the certificate is stored in a memory of the device;
means for determining that the smart card being linked to the same given private and public key pair as the requested certificate is accessible to the device;
means for utilising the requested certificate.

11. The client device of any preceding claim 8 or 10, wherein the means comprise at least one processor and at least one memory including computer program code.

12. The client device of any preceding claim 8 to 11, further comprising:
means for receiving a request of a certificate;
means for determining that such a certificate is not found in the device or on the smart card;
means for transmitting a request to a server, the request comprising information on the certificate stored on the smart card;
means for receiving another certificate from the server, the another certificate being linked to the same given private and public key pair as the certificate on the smart card; and
means for responding to the request.

13. An apparatus comprising:
means for determining that a digital certificate on a smart card accessible to a client device is valid, the digital certificate being linked to a given private and public key pair;
means for requesting another certificate from a certificate authority, the another certificate being linked to the same given private and public key pair as the certificate on the smart card;
means for storing the another certificate; and
means for transmitting the another certificate to the client device.

14. The apparatus of claim 13, wherein the certificate request comprising credentials used to login to the device client, the apparatus further comprising:
means for determining that the credentials used to login to the device client are valid prior requesting another certificate from a certificate authority.

15. A computer program comprising instructions for causing an apparatus to perform at least any of the steps of claims 1 to 7.
